# DEMANDE DE BREVET EUROPEEN

(11) **EP 4 527 689 A1**
(43) Date de publication de la demande: **26.03.2025**
(21) Numéro de dépôt: 23198319.8
(22) Date de dépôt: 19.09.2023
(51) Int. Cl.: B60P 7/04, B60P 1/28, B60J 7/10

(54) **DISPOSITIF DE TRANSPORT D'AU MOINS UN PRODUIT**

(71) Demandeur: Legras Industries, 51200 Epernay (FR)
(72) Inventeur: MARLIER, Patrice, 51150 JALONS (FR); NOTAT, Sébastien, 51100 REIMS (FR)
(74) Mandataire: Cabinet Bleger-Rhein-Poupon

(57) **Abrégé**

L'invention concerne un dispositif de transport (1) d'au moins un produit comportant au moins une benne comportant un fond (3), au moins une paroi transversale (4 ; 4'), des parois longitudinales (5 ; 6) s'étendant à partir du fond (3), raccordées entre elles (5 ; 6) par ladite au moins une paroi transversale (4 ; 4'), et présentent une extrémité supérieure (50 ; 60), et au moins un système de raccordement (7 ; 7') des extrémités supérieures (50 ; 60) des parois longitudinales (5 ; 6) comportant une première extrémité (70) coopérant avec la première paroi longitudinale (5) et une deuxième extrémité (71) coopérant avec la deuxième paroi longitudinale (6).

Ce dispositif de transport (1) est caractérisé en ce qu'il comporte des moyens de montage en rotation (8) de la première extrémité (70) dudit au moins un système de raccordement (7 ; 7') autour d'un axe de rotation (X) par rapport à la première paroi longitudinale (5), des moyens d'entraînement en rotation (9) de cette première extrémité (70) dudit au moins un système de raccordement (7 ; 7') autour dudit axe de rotation (X), des moyens de fixation réversible (10) de la deuxième extrémité (71) dudit au moins un système de raccordement (7 ; 7') par rapport à la deuxième paroi longitudinale (6) et des moyens de commande à distance (12) des moyens d'entraînement en rotation (9) et des moyens de fixation réversible (10).

## Description

La présente invention concerne un dispositif de transport d'au moins un produit, notamment un produit en vrac.

Cette invention concerne le domaine de la fabrication des dispositifs de transport, plus particulièrement qui sont configurés pour transporter des produits, notamment des produits en vrac comme des céréales ou analogue.

Cette invention concerne, plus particulièrement, le domaine de la fabrication des remorques qui sont configurées pour être attelées à un tracteur et pour transporter de tels produits.

On connait, d'ores et déjà, des dispositifs de transport qui comportent au moins une benne, voire encore, d'une part, un châssis qui est surmontée par ladite benne qui repose alors sur ce châssis et, d'autre part, des moyens de roulement qui sont surmontés par ledit châssis. Une telle benne comporte, d'une part, un fond, notamment constitué par un fond mouvant alternatif (FMA), d'autre part, au moins une paroi transversale (voire deux parois transversales), qui s'étend à partir du fond, et qui est verticale, d'autre part encore, une première paroi longitudinale et une deuxième paroi longitudinale. Ces deux parois longitudinales s'étendent à partir du fond, sont verticales, parallèles et fixes, sont raccordées entre elles par ladite au moins une paroi transversale, et présentent une extrémité supérieure. D'autre part encore, cette benne comporte au moins un système de raccordement qui est configuré pour raccorder les extrémités supérieures des deux parois longitudinales, ceci en vue de maintenir ces extrémités supérieures à une distance déterminée malgré la présence du produit, qui est chargé à l'intérieur de la benne, et qui exerce sur les parois longitudinales une pression qui a tendance à éloigner ces parois longitudinales l'une de l'autre. Un tel système de raccordement comporte, d'une part, une première extrémité qui est emboîtée sur la première paroi longitudinale et, d'autre part, une deuxième extrémité qui est emboîtée sur la deuxième paroi longitudinale.

La présence d'un tel système de raccordement complexifie le chargement de la benne par le dessus, notamment en raison du fait qu'un tel système de raccordement constitue un obstacle, selon le cas, à la pénétration (notamment à l'écoulement) du produit à l'intérieur de la benne ou pour un dispositif d'acheminement, qui est configuré pour acheminer ce produit à l'intérieur de la benne, et qui se déplace par rapport à cette benne, notamment à l'intérieur de cette benne.

Aussi, avant de charger la benne avec un tel produit, il est nécessaire qu'un opérateur entre dans la benne, monte sur une échelle, déboite et démonte ledit au moins un système de raccordement par rapport aux deux parois longitudinales, ceci avant retirer ledit au moins un système de raccordement hors de la benne. Après le chargement de cette benne avec le produit, cet opérateur doit gravir le tas de produit et remettre en place ledit au moins un système de raccordement, ceci avant de recouvrir la benne avec une bâche.

Ces opérations sont chronophages, nécessitent une manipulation qui est difficile à réaliser, sont physiques et peu ergonomiques et, surtout, elles représentent un risque élevé pour la sécurité de l'opérateur.

La présente invention se veut à même de remédier, au moins en partie, aux inconvénients des dispositifs de transport de l'état de la technique.

A cet effet, l'invention concerne un dispositif de transport d'au moins un produit. Ce dispositif de transport comporte au moins une benne qui comporte, d'une part, un fond, d'autre part, au moins une paroi transversale, qui s'étend à partir du fond, et qui est verticale, d'autre part encore, une première paroi longitudinale et une deuxième paroi longitudinale, ces parois longitudinales s'étendent à partir du fond, sont verticales, parallèles et fixes, sont raccordées entre elles par ladite au moins une paroi transversale, et présentent une extrémité supérieure, et d'autre part encore, au moins un système de raccordement, qui est configuré pour raccorder les extrémités supérieures des parois longitudinales, qui comporte une première extrémité qui coopère avec la première paroi longitudinale et une deuxième extrémité qui coopère avec la deuxième paroi longitudinale.

Ce dispositif de transport est caractérisé par le fait qu'il comporte, d'une part, des moyens de montage en rotation qui sont configurés pour monter la première extrémité dudit au moins un système de raccordement en rotation autour d'un axe de rotation par rapport à la première paroi longitudinale, d'autre part, des moyens d'entraînement en rotation qui sont configurés pour entraîner cette première extrémité dudit au moins un système de raccordement en rotation autour dudit axe de rotation, d'autre part aussi, des moyens de fixation réversible qui sont configurés pour fixer, de manière réversible, la deuxième extrémité dudit au moins un système de raccordement par rapport à la deuxième paroi longitudinale et, d'autre part encore, des moyens de commande à distance qui sont configurés pour commander à distance les moyens d'entraînement en rotation et les moyens de fixation réversible.

Selon une autre caractéristique, les moyens de fixation réversible comportent, d'une part, des moyens d'accrochage que comporte la deuxième extrémité dudit au moins un système de raccordement et, d'autre part, des moyens d'accrochage complémentaires, que comporte la deuxième paroi longitudinale, et qui coopèrent avec les moyens d'accrochage.

Encore une autre caractéristique concerne le fait que ledit au moins un système de raccordement comporte des moyens de montage en déplacement qui sont configurés pour monter les moyens d'accrochage en déplacement entre, d'une part, une position active de coopération de ces moyens d'accrochage avec les moyens d'accrochage complémentaires et, d'autre part, une position inactive de coopération de ces moyens d'accrochage avec les moyens d'accrochage complémentaires.

Une caractéristique additionnelle concerne le fait que les moyens de commande à distance comportent des moyens commande d'inactivation des moyens d'accrochage qui sont configurés pour commander le passage des moyens d'accrochage de la position active à la position inactive de coopération avec les moyens d'accrochage complémentaires.

Selon une autre caractéristique, les moyens de commande à distance comportent des moyens de commande d'activation des moyens d'accrochage qui sont configurés pour commander le passage des moyens d'accrochage de la position inactive à la position active de coopération avec les moyens d'accrochage complémentaires.

Encore une autre caractéristique concerne le fait que ledit au moins un système de raccordement comporte des moyens de réglage de la distance entre la première extrémité dudit au moins un système de raccordement et la deuxième extrémité dudit au moins un système de raccordement.

Ainsi, le dispositif de transport comporte au moins un système de raccordement des extrémités supérieures des parois longitudinales ainsi que, d'une part, des moyens de montage en rotation autour d'un axe de rotation de la première extrémité dudit au moins un système de raccordement par rapport à la première paroi longitudinale, d'autre part, des moyens d'entraînement en rotation autour dudit axe de rotation de cette première extrémité dudit au moins un système de raccordement, d'autre part encore, des moyens de fixation réversible de la deuxième extrémité dudit au moins un système de raccordement par rapport à la deuxième paroi longitudinale et, d'autre part encore, des moyens de commande à distance des moyens d'entraînement en rotation et des moyens de fixation réversible.

Ces caractéristiques permettent, avantageusement et avant le chargement de la benne, d'une part et à partir d'une position dans laquelle ledit au moins un système de raccordement raccorde les deux parois longitudinales, d'intervenir sur les moyens de fixation réversible pour libérer la deuxième extrémité dudit au moins un système de raccordement par rapport à la deuxième paroi longitudinale et, en entraînant en rotation ledit au moins un système de raccordement dans un sens de rotation, d'assurer le passage dudit au moins un système de raccordement d'une position d'extension dans laquelle ledit au moins un système de raccordement s'étend par-dessus la benne à une position escamotée dans laquelle ledit au moins un système de raccordement s'étend latéralement par rapport à cette benne et dégage l'ouverture supérieure de la benne. D'autre part, ces caractéristiques permettent, avantageusement, après le chargement de la benne et à partir de la position escamotée dudit au moins un système de raccordement, d'entraîner ledit au moins un système de raccordement en rotation dans un sens de rotation opposé, ceci pour d'assurer le passage dudit au moins un système de raccordement de la position escamotée à la position d'extension par-dessus la benne et, en intervenant sur les moyens de fixation réversible, de fixer la deuxième extrémité dudit au moins un système de raccordement par rapport à la deuxième paroi longitudinale. Ces interventions sont, avantageusement, commandées à distance par un opérateur positionné au sol ou sur une passerelle équipant la benne et ne nécessitent plus une intervention de cet opérateur à l'intérieur de la benne et en hauteur comme pour les dispositifs de transport de l'état de la technique.

Une autre caractéristique concerne le fait que ledit au moins un système de raccordement comporte des moyens de réglage de la distance entre la première extrémité dudit au moins un système de raccordement et la deuxième extrémité dudit au moins un système de raccordement. Ces caractéristiques permettent, avantageusement, d'ajuster la longueur dudit au moins un système de raccordement à la distance entre les parois longitudinales, plus particulièrement en fonction de l'absence de chargement de la benne ou du chargement de cette benne, notamment en fonction de la nature et/ou du poids et/ou du volume du produit chargé à l'intérieur de cette benne.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
[Fig.1] représente une vue schématisée et en perspective d'un dispositif de transport, qui est conforme à l'invention, et dans lequel ledit au moins un système de raccordement adopte une position d'extension dans laquelle, d'une part, ledit au moins un système de raccordement s'étend par-dessus la benne et raccorde les deux parois longitudinales et, d'autre part, la deuxième extrémité dudit au moins un système de raccordement est fixée par rapport à la deuxième paroi longitudinale.
[Fig.2] représente une vue schématisée et en perspective qui correspond à un agrandissement de la [Fig. 1].
[Fig.3] représente une vue schématisée et en perspective qui correspond à un détail du dispositif de transport illustré [Fig.1] et [Fig.2].
[Fig.4] représente une vue schématisée et en perspective qui illustre ledit au moins un système de raccordement illustré [Fig.1] à [Fig.3], ceci selon un autre angle de visualisation.
[Fig.5] représente une vue schématisée et en perspective qui correspond à un détail d'un dispositif de transport, qui est conforme à l'invention, et dans lequel ledit au moins un système de raccordement adopte une position intermédiaire entre, d'une part, une position d'extension dans laquelle ledit au moins un système de raccordement s'étend par-dessus la benne et raccorde les deux parois longitudinales et, d'autre part, une position escamotée dans laquelle ledit au moins un système de raccordement s'étend latéralement par rapport à la benne.
[Fig.6] représente une vue schématisée et en perspective du dispositif de transport, qui est conforme à l'invention, qui est illustré [Fig.1], et dans lequel ledit au moins un système de raccordement adopte une position escamotée dans laquelle ledit au moins un système de raccordement s'étend latéralement par rapport à la benne.

La présente invention concerne le domaine de la fabrication des dispositifs de transport, plus particulièrement qui sont configurés pour transporter des produits, notamment des produits en vrac comme des céréales ou analogue.

L'invention concerne, alors, un dispositif de transport 1 d'au moins un produit, notamment en vrac.

Ce dispositif de transport 1 comporte au moins une benne 2 qui comporte un fond 3, notamment un fond mouvant alternatif (usuellement dénommé FMA).

Cette benne 2 comporte, encore, au moins une paroi transversale (4 ; 4'), qui s'étend à partir du fond 3, et qui est verticale. En fait, cette benne 2 comporte, de préférence, d'une part, une paroi transversale avant 4 qui s'étend à l'avant de la benne 2, ceci dans le sens déplacement du dispositif de transport 1 et, d'autre part, une paroi transversale arrière 4', qui s'étend à l'arrière de la benne 2 (là encore dans le sens de déplacement du dispositif de transport 1), et qui comporte au moins une porte permettant de refermer la benne 2 et d'accéder à l'intérieur de celle-ci.

Cette benne 2 comporte, aussi, une première paroi longitudinale 5 et une deuxième paroi longitudinale 6. Ces parois longitudinales (5 ; 6) s'étendent à partir du fond 3. Ces parois longitudinales (5 ; 6) sont verticales, parallèles et fixes. Ces parois longitudinales (5 ; 6) sont raccordées entre elles (5 ; 6) par ladite au moins une paroi transversale (4 ; 4') et présentent une extrémité supérieure (50 ; 60).

Cette benne comporte, également, au moins un système de raccordement (7 ; 7'), qui est configuré pour raccorder les extrémités supérieures (50 ; 60) des parois longitudinales (5 ; 6). En fait et tel que visible sur les figures en annexe, cette benne 2 comporte, de préférence, une pluralité de systèmes de raccordement (7 ; 7'), qui sont configurés pour raccorder les extrémités supérieures (50 ; 60) des parois longitudinales (5 ; 6), et qui sont espacés (notamment de manière régulière) entre la paroi transversale avant 4 et la paroi transversale arrière 4'.

Un tel système de raccordement (7 ; 7') comporte une première extrémité 70 qui coopère avec la première paroi longitudinale 5 (plus particulièrement avec l'extrémité supérieure 50 de cette première paroi longitudinale 5) et une deuxième extrémité 71, qui est opposée à la première extrémité 70, et qui coopère avec la deuxième paroi longitudinale 6 (plus particulièrement avec l'extrémité supérieure 60 de cette première paroi longitudinale 6).

Selon l'invention, le dispositif de transport 1 comporte des moyens de montage en rotation 8 qui sont configurés pour monter la première extrémité 70 dudit au moins un système de raccordement (7 ; 7') en rotation autour d'un axe de rotation X (qui est, de préférence, parallèle à la première paroi longitudinale 5, plus particulièrement parallèle à l'extrémité supérieure 50 de cette première paroi longitudinale 5), ceci par rapport à la première paroi longitudinale 5, plus particulièrement sur l'extrémité supérieure 50 de cette première paroi longitudinale 5. De tels moyens de montage en rotation 8 permettent, alors, avantageusement, de monter l'intégralité dudit au moins un système de raccordement (7 ; 7') en rotation autour dudit axe de rotation X, ceci par rapport à la première paroi longitudinale 5, plus particulièrement sur l'extrémité supérieure 50 de cette première paroi longitudinale 5.

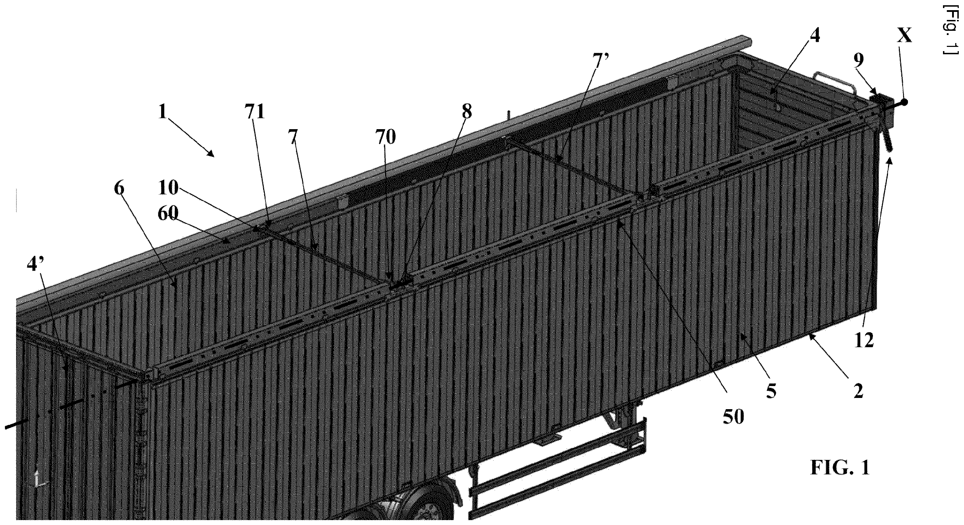

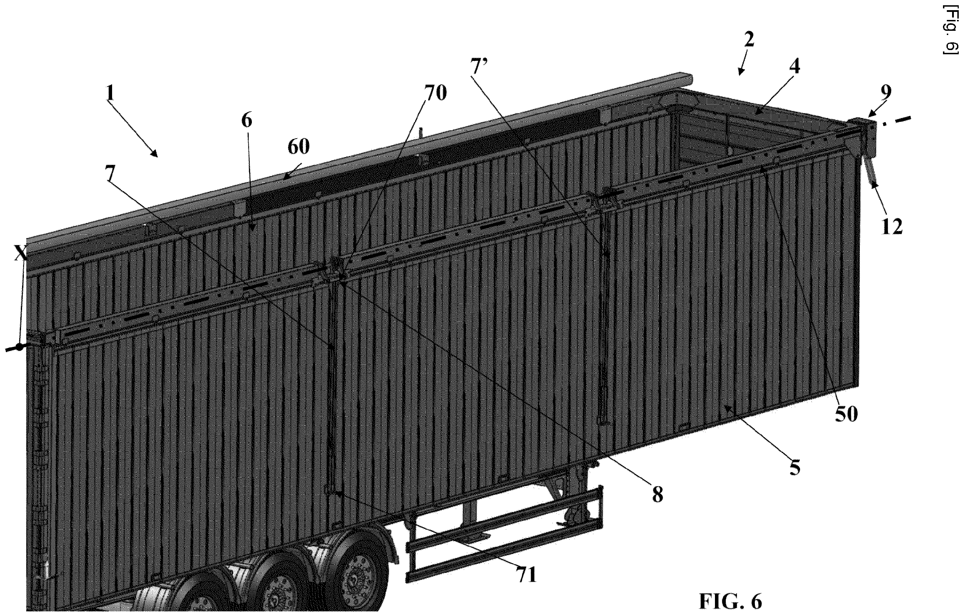

Tel que visible sur les figures en annexe, de tels moyens de montage en rotation 8 sont, alors, configurés pour monter ledit au moins un système de raccordement (7 ; 7') en rotation autour dudit axe de rotation X, ceci entre, d'une part, une position d'extension dans laquelle ledit au moins un système de raccordement (7 ; 7') s'étend par-dessus la benne 2 et raccorde les deux parois longitudinales (5 ; 6) tandis que la deuxième extrémité (71) dudit au moins un système de raccordement (7 ; 7') est fixée par rapport à la deuxième paroi longitudinale 6 (Fig. 1 à Fig. 4) et, d'autre part, une position escamotée dans laquelle ledit au moins un système de raccordement (7 ; 7') s'étend latéralement par rapport à la benne 2 (plus particulièrement latéralement par rapport à la première paroi longitudinale 5) et extérieurement à cette benne 2 (Fig. 6).

De tels moyens de montage en rotation 8 peuvent comporter, d'une part, une chape 80 qui est solidaire fixement de la première paroi longitudinale 5, plus particulièrement de l'extrémité supérieure 50 de cette première paroi longitudinale 5 et, d'autre part, d'un arbre 81, qui est monté en rotation sur ladite chape 80 et autour dudit axe de rotation X, et qui est solidaire en rotation de la première extrémité 71 dudit au moins un système de raccordement (7 ; 7') et, ainsi, dudit au moins un système de raccordement (7 ; 7').

Le dispositif de transport 1 comporte, alors, également, des moyens d'entraînement en rotation 9 qui sont configurés pour entraîner cette première extrémité 1 dudit au moins un système de raccordement (7 ; 7') en rotation autour dudit axe de rotation X et, par conséquent, l'intégralité dudit au moins un système de raccordement (7 ; 7') en rotation autour dudit axe de rotation X.

De tels moyens d'entraînement en rotation 9 sont, alors, configurés pour entraîner ledit au moins un système de raccordement (7 ; 7') en rotation autour dudit axe de rotation X, ceci entre, d'une part, la position d'extension mentionnée ci-dessus et, d'autre part, la position escamotée mentionnée ci-dessus.

En fait, ces moyens d'entraînement en rotation 9 sont, plus particulièrement, configurés pour entraîner en rotation ledit arbre 81, que comportent les moyens de montage en rotation 8, et qui s'étend sur une partie au moins de la longueur de la première paroi longitudinale 5. De tels moyens d'entraînement en rotation 9 peuvent être de type pneumatique, hydraulique ou électrique. De tels moyens d'entraînement en rotation 9 peuvent être implantés extérieurement à la benne 2, plus particulièrement sur ladite au moins une paroi transversale (4 ; 4'), notamment sur la paroi transversale avant 4.

Selon une autre caractéristique, le dispositif de transport 1 comporte, aussi, des moyens de fixation réversible 10 qui sont configurés pour fixer, de manière réversible, la deuxième extrémité 71 dudit au moins un système de raccordement (7 ; 7') par rapport à la deuxième paroi longitudinale 6, plus particulièrement sur l'extrémité supérieure 60 de la deuxième paroi longitudinale 6.

De tels moyens de fixation réversible 10 comportent, d'une part, des moyens d'accrochage 100 que comporte la deuxième extrémité 71 dudit au moins un système de raccordement (7 ; 7') et, d'autre part, des moyens d'accrochage complémentaires 101, que comporte la deuxième paroi longitudinale 6 (plus particulièrement l'extrémité supérieure 60 de cette deuxième paroi longitudinale 6), et qui coopèrent avec les moyens d'accrochage 100.

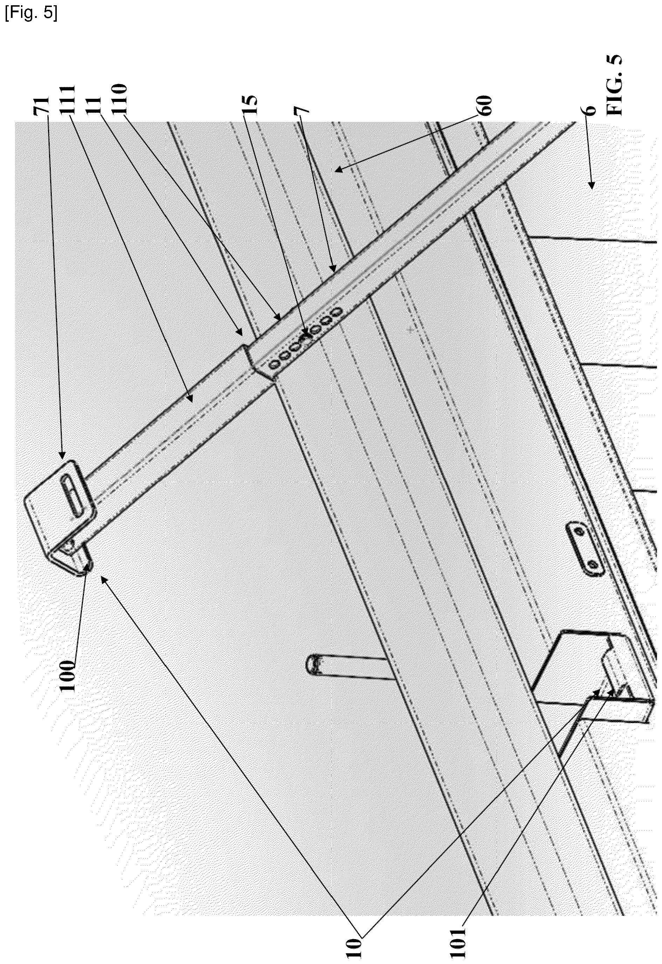

Une autre caractéristique de l'invention consiste en ce que ledit au moins un système de raccordement (7 ; 7') comporte des moyens de montage en déplacement 11 qui sont configurés pour monter les moyens d'accrochage 100 en déplacement (plus particulièrement en translation) entre, d'une part, une position active de coopération de ces moyens d'accrochage 100 avec les moyens d'accrochage complémentaires 101 (Fig. 1 à Fig.4) et, d'autre part, une position inactive de coopération de ces moyens d'accrochage 100 avec les moyens d'accrochage complémentaires 101 (Fig. 5 et Fig. 6).

Tel que visible sur les figures en annexe, ces moyens de montage en déplacement 11 comportent, d'une part, un premier tube 110, que comporte ledit au moins un système de raccordement (7 ; 7'), et qui s'étend à partir de la première extrémité 70 dudit au moins un système de raccordement (7 ; 7') et en direction de la deuxième extrémité (71) dudit au moins un système de raccordement (7 ; 7') et, d'autre part, un deuxième tube 111, que comporte ledit au moins un système de raccordement (7 ; 7'), qui comporte la deuxième extrémité 71 dudit au moins un système de raccordement (7 ; 7') ainsi que les moyens d'accrochage 100, qui s'étend à partir de la deuxième extrémité 71 et en direction de la première extrémité 70 dudit au moins un système de raccordement (7 ; 7'), qui est emboité à l'intérieur du premier tube 110 ou à l'intérieur duquel le premier tube 110 est emboité, et qui est mobile par rapport au premier tube 110.

Le dispositif de transport 1 comporte, alors, également, des moyens de commande à distance 12 qui sont configurés pour commander à distance les moyens d'entraînement en rotation 9 et les moyens de fixation réversible 10.

A ce propos, il convient d'observer que les moyens de commande à distance 12 comportent des moyens commande d'inactivation 13 des moyens d'accrochage 100 qui sont configurés pour commander le passage des moyens d'accrochage 100 de la position active (Fig. 1 à Fig. 4) à la position inactive (Fig. 5 et Fig. 6) de coopération avec les moyens d'accrochage complémentaires 101.

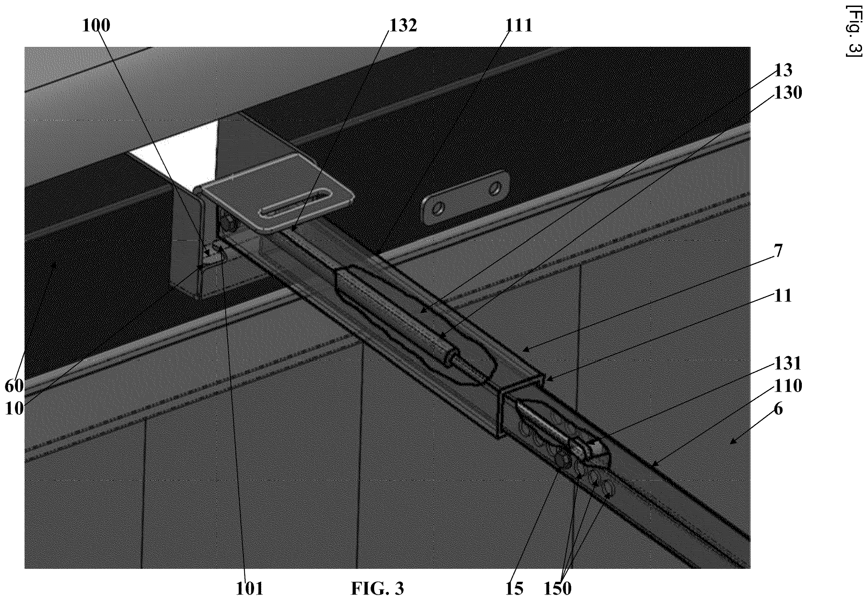

Tel que visible sur la Fig. 3, ces moyens de commande d'inactivation 13 des moyens d'accrochage 100 comportent un vérin 130 qui présente, d'une part, une première extrémité 131 qui est solidaire en déplacement du premier tube 110 et, d'autre part, une deuxième extrémité 132 qui est solidaire en déplacement du deuxième tube 111. Ce vérin 130 est configuré pour entraîner en déplacement le deuxième tube 111 (et, ainsi, les moyens d'accrochage 100) par rapport au premier tube 110. Ce vérin 132 est positionné à l'intérieur du premier tube 110 et/ou du deuxième tube 111.

Selon une autre caractéristique, les moyens de commande à distance 12 comportent, également, des moyens de commande d'activation 14 des moyens d'accrochage 100 qui sont configurés pour commander le passage des moyens d'accrochage 100 de la position inactive (Fig. 5 et Fig. 6) à la position active (Fig. 1 à Fig. 4) de coopération avec les moyens d'accrochage complémentaires 101.

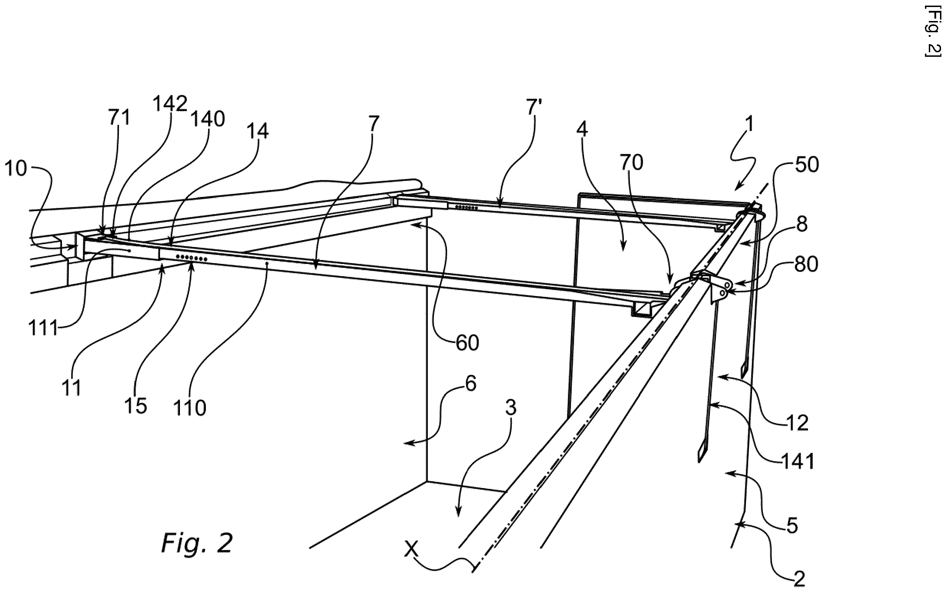

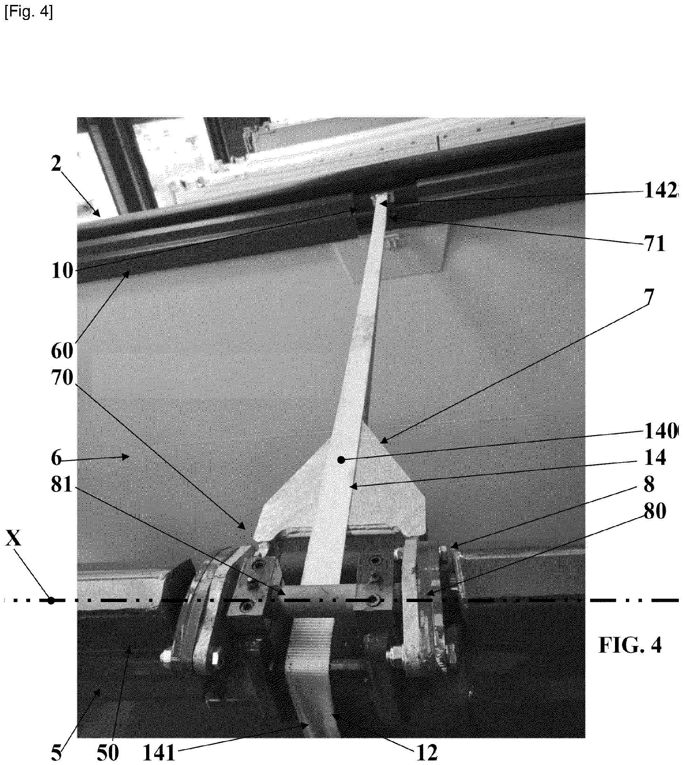

Tel que visible sur les Fig. 2 et Fig. 4, ces moyens de commande d'activation 14 comportent au moins une sangle 140 qui présente, d'une part, au moins une première portion 141 (plus particulièrement qui comporte une première extrémité) qui s'étend à l'extérieur de la benne 2 (plus particulièrement du côté extérieur de la première paroi longitudinale 5 et/ou latéralement par rapport à la benne 2, voire sous cette benne 2) et, d'autre part, une deuxième portion 142 (plus particulièrement qui comporte une deuxième extrémité) qui est solidaire en déplacement des moyens d'accrochage 100.

Tel que visible sur ces figures, la sangle 140 s'étend par-dessus l'extrémité supérieure 50 de la première paroi longitudinale 5 et/ou par-dessus ledit au moins un système de raccordement (7 ; 7'), plus particulièrement par-dessus le premier tube 110 et par-dessus le deuxième tube 111.

On observera que ces moyens de commande d'activation 14 sont configurés pour être manipulés par un opérateur positionné au sol ou sur une passerelle qui équipe la benne 2. Ces moyens de commande d'activation 14 peuvent, alors, plus particulièrement, être configurés pour qu'un opérateur (positionné au sol ou sur la passerelle) puisse exercer (notamment manuellement ou par l'intermédiaire d'un moyen de traction décrit ci-dessous) une action (notamment une traction) sur ces moyens de commande d'activation 14 (plus particulièrement sur la première portion 141 de la sangle 140, voire sur la première extrémité de cette sangle 140) ce qui a pour effet d'amener les moyens d'accrochage 100 de la position inactive (Fig. 5 et Fig. 6) à la position active (Fig. 1 à Fig. 4) de coopération avec les moyens d'accrochage complémentaires 101.

Selon un premier type de réalisation, ces moyens de commande d'activation 14 peuvent être configurés pour qu'un opérateur (positionné au sol ou sur la passerelle) puisse exercer manuellement une traction sur ces moyens de commande d'activation 14 (plus particulièrement sur la première portion 141 de la sangle 140, voire sur la première extrémité de cette sangle 140) ce qui a pour effet d'amener les moyens d'accrochage 100 de la position inactive à la position active de coopération avec les moyens d'accrochage complémentaires 101.

Cependant et selon un deuxième type de réalisation, ces moyens de commande d'activation 14 peuvent, encore, comporter un moyen de traction (non représenté) qui est configuré pour exercer une traction sur la sangle 140, plus particulièrement sur la première portion 141 de la sangle 140, voire sur la première extrémité de cette sangle 140. De tels moyens de traction peuvent être motorisés et être configurés pour qu'un opérateur (positionné au sol ou sur la passerelle) puisse les actionner.

On observera, également, que ces moyens de commande d'activation 14 sont configurés pour agir à l'encontre des moyens de commande d'inactivation 13 mentionnés ci-dessus.

De manière alternative ou (et de préférence) additionnelle, les moyens de commande d'activation 14 comportent un moyen de maintien (non représenté) qui est configuré pour maintenir les moyens d'accrochage 100 dans une position active de coopération avec les moyens d'accrochage complémentaire 101, plus particulièrement à l'encontre des moyens de commande de l'inactivation 13 de ces moyens d'accrochage 100.

A ce propos, on observera que le moyen de traction et/ou le moyen de maintien peut être constitué par un système de tendeur à cliquet.

Une autre caractéristique concerne le fait que ledit au moins un système de raccordement (7 ; 7') comporte des moyens de réglage 15 qui sont configurés pour régler la distance entre, d'une part, la première extrémité 70 dudit au moins un système de raccordement (7 ; 7') et, d'autre part, la deuxième extrémité 71 dudit au moins un système de raccordement (7 ; 7') et, donc, les moyens d'accrochage 100.

Ces moyens de réglage 15 permettent, alors, avantageusement, d'adapter la longueur dudit au moins un système de raccordement (7 ; 7') à l'écartement entre la première paroi longitudinale 5 et la deuxième paroi longitudinale 6, plus particulièrement en fonction du chargement ou de l'absence de chargement de la benne 2.

Ces moyens de réglage 15 de la distance comportent une pluralité de moyens d'ancrage 150, que comporte le premier tube 110, qui sont positionnés à différentes distances de la première extrémité 70 dudit au moins un système de raccordement (7 ; 7'), et qui sont configurés pour permettre un ancrage (plus particulièrement une fixation) de la première extrémité 131 du vérin 130 des moyens de commande d'inactivation 13 des moyens d'accrochage 100, ceci à différentes distances de la première extrémité 70 dudit au moins un système de raccordement (7 ; 7').

## Revendications

1. Dispositif de transport (1) d'au moins un produit, ce dispositif de transport (1) comporte au moins une benne qui comporte, d'une part, un fond (3), d'autre part, au moins une paroi transversale (4 ; 4'), qui s'étend à partir du fond (3), et qui est verticale, d'autre part encore, une première paroi longitudinale (5) et une deuxième paroi longitudinale (6), ces parois longitudinales (5 ; 6) s'étendent à partir du fond (3), sont verticales, parallèles et fixes, sont raccordées entre elles (5 ; 6) par ladite au moins une paroi transversale (4 ; 4'), et présentent une extrémité supérieure (50 ; 60), et d'autre part encore, au moins un système de raccordement (7 ; 7'), qui est configuré pour raccorder les extrémités supérieures (50 ; 60) des parois longitudinales (5 ; 6), qui comporte une première extrémité (70) qui coopère avec la première paroi longitudinale (5) et une deuxième extrémité (71) qui coopère avec la deuxième paroi longitudinale (6), **caractérisé par le fait qu'**il comporte, d'une part, des moyens de montage en rotation (8) qui sont configurés pour monter la première extrémité (70) dudit au moins un système de raccordement (7 ; 7') en rotation autour d'un axe de rotation (X) par rapport à la première paroi longitudinale (5), d'autre part, des moyens d'entraînement en rotation (9) qui sont configurés pour entraîner cette première extrémité (70) dudit au moins un système de raccordement (7 ; 7') en rotation autour dudit axe de rotation (X), d'autre part aussi, des moyens de fixation réversible (10) qui sont configurés pour fixer, de manière réversible, la deuxième extrémité (71) dudit au moins un système de raccordement (7 ; 7') par rapport à la deuxième paroi longitudinale (6) et, d'autre part encore, des moyens de commande à distance (12) qui sont configurés pour commander à distance les moyens d'entraînement en rotation (9) et les moyens de fixation réversible (10).

2. Dispositif de transport (1) selon la revendication 1, **caractérisé par le fait que** les moyens de fixation réversible (10) comportent, d'une part, des moyens d'accrochage (100) que comporte la deuxième extrémité (71) dudit au moins un système de raccordement (7 ; 7') et, d'autre part, des moyens d'accrochage complémentaires (101), que comporte la deuxième paroi longitudinale (6), et qui coopèrent avec les moyens d'accrochage (100).

3. Dispositif de transport (1) selon la revendication 2, **caractérisé par le fait que** ledit au moins un système de raccordement (7 ; 7') comporte des moyens de montage en déplacement (11) qui sont configurés pour monter les moyens d'accrochage (100) en déplacement entre, d'une part, une position active de coopération de ces moyens d'accrochage (100) avec les moyens d'accrochage complémentaires (101) et, d'autre part, une position inactive de coopération de ces moyens d'accrochage 100) avec les moyens d'accrochage complémentaires (101).

4. Dispositif de transport (1) selon la revendication 3, **caractérisé par le fait que** les moyens de montage en déplacement (11) comportent, d'une part, un premier tube (110), que comporte ledit au moins un système de raccordement (7 ; 7'), et qui s'étend à partir de la première extrémité (70) dudit au moins un système de raccordement (7 ; 7') et en direction de la deuxième extrémité (71) dudit au moins un système de raccordement (7 ; 7') et, d'autre part, un deuxième tube (111), que comporte ledit au moins un système de raccordement (7 ; 7'), qui comporte la deuxième extrémité (71) dudit au moins un système de raccordement (7 ; 7') ainsi que les moyens d'accrochage (100), qui s'étend à partir de la deuxième extrémité (71) et en direction de la première extrémité (70) dudit au moins un système de raccordement (7 ; 7'), qui est emboité à l'intérieur du premier tube (110) ou à l'intérieur duquel le premier tube (110) est emboité, et qui est mobile par rapport au premier tube(110).

5. Dispositif de transport (1) selon l'une quelconque des revendications 3 ou 4, **caractérisé par le fait que** les moyens de commande à distance (12) comportent des moyens commande d'inactivation (13) des moyens d'accrochage (100) qui sont configurés pour commander le passage des moyens d'accrochage (100) de la position active à la position inactive de coopération avec les moyens d'accrochage complémentaires (101).

6. Dispositif de transport (1) selon les revendications 4 et 5, **caractérisé par le fait que** les moyens de commande d'inactivation (13) des moyens d'accrochage (100) comportent un vérin (130) qui présente, d'une part, une première extrémité (131) qui est solidaire en déplacement du premier tube (110) et, d'autre part, une deuxième extrémité (132) qui est solidaire en déplacement du deuxième tube (111), ce vérin (130) est configuré pour entraîner en déplacement le deuxième tube (111) par rapport au premier tube (110).

7. Dispositif de transport (1) selon l'une quelconque des revendications 3 à 6, **caractérisé par le fait que** les moyens de commande à distance (12) comportent des moyens de commande d'activation (14) des moyens d'accrochage (100) qui sont configurés pour commander le passage des moyens d'accrochage (100) de la position inactive à la position active de coopération avec les moyens d'accrochage complémentaires (101).

8. Dispositif de transport (1) selon la revendication 7, **caractérisé par le fait que** les moyens de commande d'activation (14) comportent au moins une sangle (140) qui présente, d'une part, au moins une première portion (141) qui s'étend à l'extérieur de la benne (2) et, d'autre part, une deuxième portion (142) qui est solidaire en déplacement des moyens d'accrochage (100).

9. Dispositif de transport (1) selon la revendication 8, **caractérisé par le fait que** les moyens de commande d'activation (14) comportent un moyen de traction qui est configuré pour exercer une traction sur la sangle (140).

10. Dispositif de transport (1) selon l'une quelconque des revendications 7 à 9, **caractérisé par le fait que** les moyens de commande d'activation (14) comportent un moyen de maintien qui est configuré pour maintenir les moyens d'accrochage (100) dans une position active de coopération avec les moyens d'accrochage complémentaire (101), plus particulièrement à l'encontre des moyens de commande de l'inactivation (13) des moyens d'accrochage (100).

11. Dispositif de transport selon l'une quelconque des revendication précédentes, **caractérisé par le fait que** ledit au moins un système de raccordement (7 ; 7') comporte des moyens de réglage (15) qui sont configurés pour régler la distance entre la première extrémité (70) dudit au moins un système de raccordement (7 ; 7') et la deuxième extrémité (71) dudit au moins un système de raccordement (7 ; 7').

12. Dispositif de transport (1) selon les revendications 6 et 11, **caractérisé par le fait que** les moyens de réglage (15) de la distance comportent une pluralité de moyens d'ancrage (150), que comporte le premier tube (110), qui sont positionnés à différentes distances de la première extrémité (70) dudit au moins un système de raccordement (7 ; 7'), et qui sont configurés pour permettre un ancrage de la première extrémité (131) du vérin (130) des moyens de commande d'inactivation (13) des moyens d'accrochage (100), ceci à différentes distances de la première extrémité (70) dudit au moins un système de raccordement (7 ; 7').

13. Dispositif de transport (1) selon l'une quelconque des revendications précédentes, **caractérisé par le fait qu'**il comporte, encore, d'une part, un châssis qui est surmonté par ladite benne (2) qui repose sur ce châssis et, d'autre part, des moyens de roulement qui sont surmontés par ledit châssis.
